(19) **Europäisches Patentamt European Patent Office Office européen des brevets**

(11) **EP 3 110 721 B2**

(12) **NEW EUROPEAN PATENT SPECIFICATION**

After opposition procedure

(45) Date of publication and mention of the opposition decision:
**12.11.2025 Bulletin 2025/46**

(45) Mention of the grant of the patent:
**02.01.2019 Bulletin 2019/01**

(21) Application number: **15711865.4**

(22) Date of filing: **24.02.2015**

(51) International Patent Classification (IPC):
**B65D 85/804** ^(2006.01)

(52) Cooperative Patent Classification (CPC):
**B65D 85/8043; B29C 48/21**

(86) International application number:
**PCT/IB2015/051374**

(87) International publication number:
**WO 2015/128799 (03.09.2015 Gazette 2015/35)**

(54) **CUP FOR A COFFEE CAPSULE**

**KAPSELHALTER FÜR EIN KAFFEEKAPSEL**

**COUPELLE POUR CAPSULE À CAFÉ**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2014 IT BO20140101**

(43) Date of publication of application:
**04.01.2017 Bulletin 2017/01**

(73) Proprietor: **Sacmi Cooperativa Meccanici Imola Societa' Cooperativa 40026 Imola (BO) (IT)**

(72) Inventor: **MINGANTI, Gianni I-40026 Imola (Bologna) (IT)**

(74) Representative: **Conti, Marco Bugnion S.p.A. Via di Corticella, 87 40128 Bologna (IT)**

(56) References cited:
**EP-A1- 2 465 793      WO-A1-2012/080501
WO-A1-2013/029184    WO-A1-2013/132435
WO-A1-2013/136209    WO-A1-2013/157924
US-A1- 2010 288 131**

## Description

## Technical field

The present invention relates to a cup for a coffee capsule, in particular a cup made of a plastic material, and a machine for making the cup and a coffee capsule comprising the cup.

## Background art

Known in the prior art (for example, from patent documents WO2012/080501, EP2489609, WO2013/076519, WO2013/136209, US2010/288131 and WO2013/157924) are coffee capsules comprising a cup of plastic material, filled with a dose of coffee powder and closed by a lid defined by a circular panel sealed onto the cup. The cup has a flat annular flange onto whose front surface the lid is sealed.

In use, the coffee capsules are inserted into a specific compartment of a coffee machine equipped with knives for perforating the capsule and with a hood (or lid) configured to clamp down on and seal the annular flange of the capsule in order to brew the coffee according to a method known in the trade of machines of this kind.

In some solutions, the knives intercept the capsule at the lid, to introduce steam or hot water through the lid. An example of this type of capsule is provided by patent document US2010/288131. Instead, other solutions provide that the blades intercept the capsule at the bottom of the cup. An example of this type of capsule is provided by the patent document WO2013/136 209.

It should be noted that this invention refers in particular to cups and capsules designed to be opened at the bottom of the cup. In other words, this invention refers in particular to cups and capsules designed to be used in coffee machines whose knives perforate the capsule through the bottom of the cup.

In these coffee machines, a rear surface of the annular flange is pressed, during infusion, against an upper edge of a pressure hood element in such a way as to create a fluid-tight seal between the cup and the hood on the rear surface of the annular flange, at the bottom end of the cup, where the cup is perforated by the knives.

In light of this, one of the requisites of the capsule is to create an optimum fluid-tight seal between the cup and the hood during use of the capsule in a coffee making machine.

The variability of the following three factors weigh negatively on the obtainment of a good seal: the shape of the pressure hood (forming part of the coffee making machine), the shape of the capsule and the centring, that is to say, the relative position between capsule and pressure hood in the coffee machine.

It should also be noted that other variations in the shape and size of the pressure hood may be caused by the operation of the coffee machine (changes in the temperature of the hood).

Further, the technology of capsules designed to be perforated at the bottom requires the capsule bottoms to be relatively rigid in order to facilitate the cutting action of the knives. This is generally obtained by increasing the thickness of the capsule bottom which, however, leads to problems of higher weight and higher production costs on account of the larger amount of material used.

Another need is that of preserving the aroma of the coffee. In this regard, it should be noted that some capsules currently available on the market have an outer wrapper (bag) made of a material which is impermeable to aromas and which must be torn manually at the moment of use. This solution is disadvantageous, however, because it involves additional costs and, in practice, is not fully effective in preserving the coffee aroma up to the moment the beverage is brewed.

Prior art cups do not meet the above mentioned requirements because they do not allow the production of plastic coffee capsules which guarantee high efficiency and reliability of use in coffee machines which perforate the bottoms of the capsules and which hold the cups tightly by the back of the annular flange of the cup itself.

## Disclosure of the invention

This invention therefore has for an aim to provide a cup for a coffee capsule which overcomes the above mentioned disadvantages of the prior art and which meets the above mentioned requirements.

More specifically, it is an aim of the invention to provide a cup for a coffee capsule which can create an optimum fluid tight seal with the hood during use. More specifically, the aim is to create a fluid tight seal which remains effective and robust even with variations in the capsule and in the coffee machine, as well as with variations in the shape and size of the pressure hood, in the shape of the capsule and in the centring of the pressure hood and the capsule relative to each other.

Another aim of the invention is to provide a cup for a coffee capsule which is light in weight and inexpensive to make.

A further aim of the invention is to provide a cup for a coffee capsule that can retain to a high degree the aroma of the coffee contained therein.

These aims are fully achieved by the cup according to the invention as characterized in one or more of the appended claims.

This invention also has for an object a coffee capsule comprising the cup and a method and machine for making the cup, according to one or more of the appended claims.

Another object of the invention is a method for making coffee using a capsule of the invention, according to one or more of the appended claims.

In particular, the present disclosure relates to a cup for a coffee capsule, wherein the capsule coffee is intended to be used in a coffee machine equipped with a pressure hood element (bell shaped) having an end edge, for providing a seal on the capsule.

The cup comprises a containment (housing) body, which extends between a bottom edge and an upper edge, and an annular flange, positioned at the upper edge of the container body.

The annular flange extends around an axis. Said axis is an axis of cylindrical symmetry for the capsule.

The annular flange has a rear face, facing the containment body, and a front face, adapted to receive a cup sealing lid, to form the capsule.

The containment body and the annular flange are defined (i.e. formed) by a multilayer structure. This multilayer structure has an inner layer made of plastic material, defining the front face of the annular flange and the inner surface of the container body. The multilayer structure also has an outer layer, made of soft plastic material; the outer layer defines the the rear face of the annular flange and the outer surface of the containment body.

Moreover, the multilayer structure has an intermediate layer, arranged between the inner layer and the outer layer, and made of a material impermeable to oxygen and aromas.

The annular flange has, on the rear face, an annular ridge and an annular groove, which extend around said axis (i.e. they surround said axis, that, is, they are positioned around said axis). The annular projection and the annular groove are operatively coupled to the end edge of the pressure hood element, when the capsule is inserted into the coffee machine and the pressure hood element is activated. Thus, the annular ridge and the annular groove are configured to (that is, are adapted to) cooperate with the end edge of the pressure hood element of the coffee machine, to provide a seal between the pressure element and the capsule.

The fact that the outer layer of the capsule (which defines annular projection and the annular groove) is soft makes the cup particularly effective in achieving such a seal with the pressure element, during the production of the drink in the coffee machine.

Hence, the annular projection and the annular groove are configured to be able to act in conjunction with the end edge of the pressure hood element of the coffee machine; in other words, the annular projection and the annular groove are configured to be operatively active in conjunction with the end edge of a pressure hood element of the coffee machine.

**Brief description of drawings**

The technical features of the invention, with reference to the above aims, are clearly described in the appended claims and its advantages are more apparent from the detailed description which follows, with reference to the accompanying drawings which illustrate a preferred, non-limiting example embodiment of the invention and in which

- Figure 1 illustrates a cup according to this description;
- Figure 1A shows a detail of a pressure hood designed to interact in use with the cup of Figure 1;
- Figure 2 shows a detail of the cup of Figure 1;
- Figure 3 illustrates a cup according to this description;

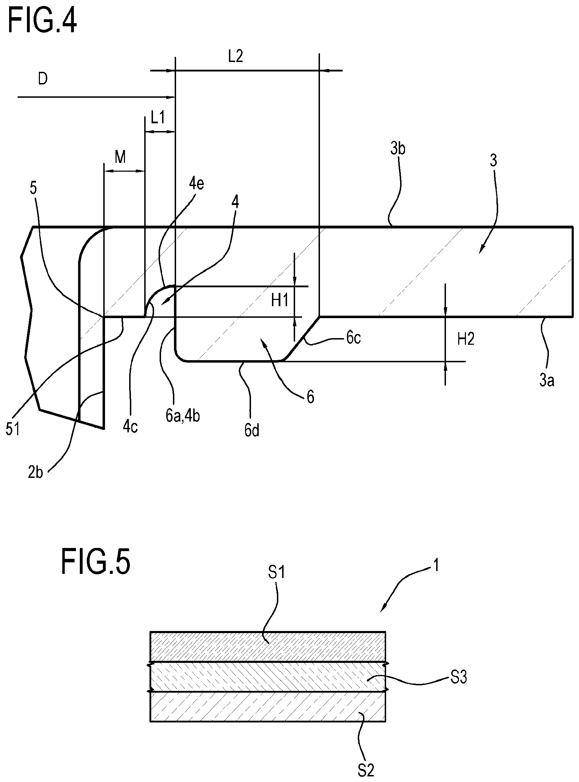

- Figure 4 shows the detail of Figure 2, with parameters indicated;
- Figure 5 shows a cross section of a part of the cup of Figure 1;

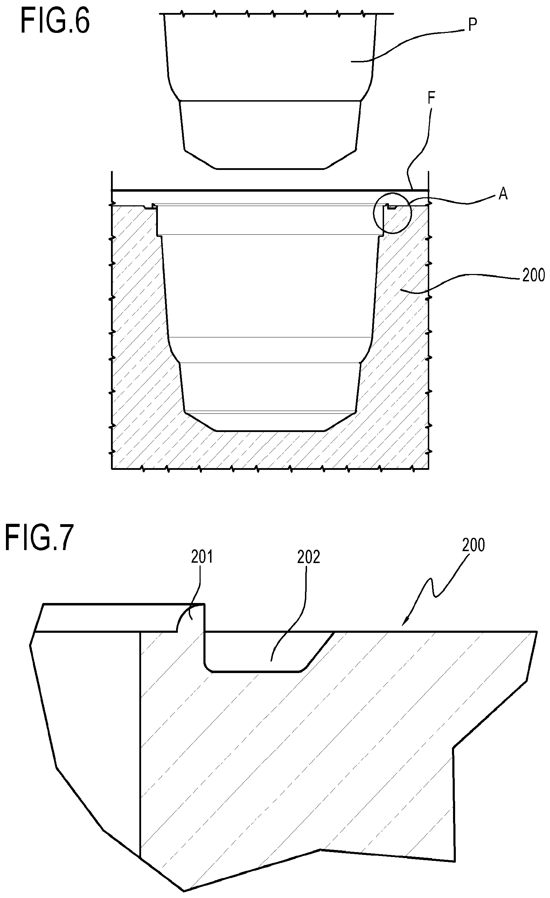

- Figure 6 schematically illustrates a machine for making a cup according to this description;
- Figure 7 shows an enlargement of the detail A from Figure 6;

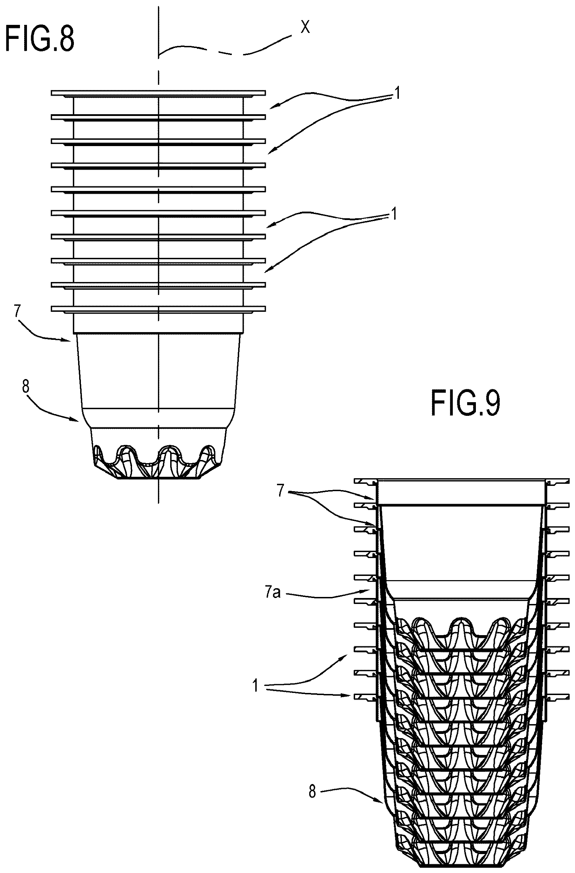

- Figure 8 shows a plurality of cups of Figure 1 stacked on each other;
- Figure 9 shows the plurality of cups of Figure 8 in a cross section view.

**Detailed description of preferred embodiments of the invention**

With reference to the accompanying drawings, the numeral 1 denotes in its entirety a cup for a coffee capsule according to this invention.

The cup 1 is basically made up of two parts: a containment body 2 which internally defines a space "V" open at the top, for containing a dose 30 of coffee powder and which extends between a bottom 2a and an upper edge 2b, and an annular flange 3 located at the upper edge 2b of the containment body 2.

The annular flange 3 extends around an axis "X" which preferably constitutes an axial axis of symmetry of the containment body 2 and, still more preferably, of the entire cup 1.

The annular flange 3 lies mainly in a flat plane, perpendicular to the axis "X".

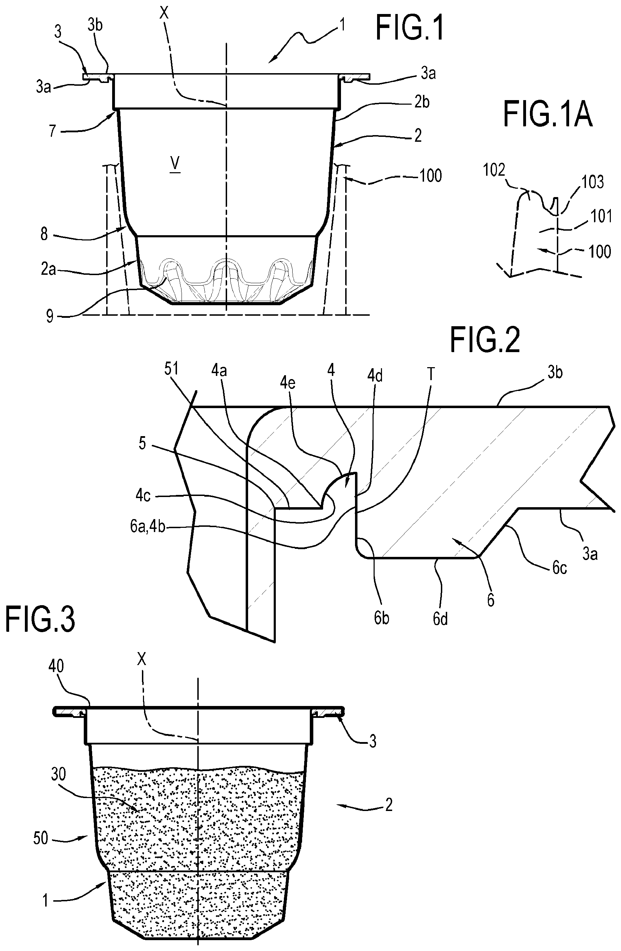

The annular flange 3 has a rear (or underside) face 3a, directed towards the containment body 2, and a front (or top) face 3b, adapted to receive a sealing lid/disc 40 applied to it in order to hermetically isolate the dose 30 of coffee inside the space "V" to obtain a capsule 50 as shown Figure 3.

Advantageously, the annular flange 3 has, on its rear face 3a, an annular groove 4 which extends around the axis "X". The groove 4 is configured to act in conjunction with an end edge 101 of a pressure hood element 100 of an infusion machine to create a hermetic seal during infusion of the coffee contained in the cup 1.

The groove 4, which extends along a circular line centred on the axis "X", is therefore axisymmetric.

The groove 4 has a profile which, in transversal cross section (that is to say, perpendicularly to the line which the groove 4 extends along) is defined at least partly by a circular arc. As shown in the drawings, the groove 4 has a width "L1" (that is, a radial extension) of between 0.15 mm and 0.45 mm, preferably approximately 0.25 mm, measured diametrically relative to the axis "X".

The groove 4 has a depth "H1" of between 0.15 mm and 0.40 mm, preferably approximately 0.24mm.

Further, the annular groove 4 is located at a position spaced from an annular joining zone 5 (that is, a transition zone of connection) joining to each other the upper edge 2b of the containment body 2 and the annular flange 3. Preferably, the annular groove 4 has an inner fastening edge 4a spaced from the annular joining zone 5 by a distance "M" of between 0.2 and 0.4 mm, preferably approximately 0.33 mm.

Preferably, therefore, the rear face 3a of the flange, in the proximity of the body 2 of the cup 1 defines a border 51, that is, an annular zone interposed between the body 2 (that is, the upper edge 2b of the containment body 2) and the groove 4 (that is, the fastening edge 4a of the groove 4). The border 51 is preferably flat, that is, without protrusions or grooves, and is substantially perpendicular to the axis X, that is to say, it extends radially. The width of the border 51 is labelled M.

The groove has three portions: an inside wall 4c (proximal to the body 2 of the cup 1), an outside wall 4d (distal from the body 2 of the cup 1), and a bottom wall 4e interposed between the inside wall 4c and the outside wall 4d.

Also, the annular flange 3 has on its rear face 3a an annular ridge or tooth 6. Preferably, the ridge 6 is adjacent to the groove 4.

Preferably, the ridge 6 is on the outer side of the groove 4. The annular ridge 6 extends (axially) away from the rear face 3a of the annular flange 3 (that is, it protrudes from the rear face 3a of the annular flange 3).

Preferably, the annular ridge 6 has a fastening edge 6a coinciding with the outlet edge 4b of the groove 4.

Preferably, the annular ridge 6 has three portions: an inside wall 6b (proximal to the body 2 of the cup 1), an outside wall 6c (distal from the body 2 of the cup 1), and a top wall 6d interposed between the inside wall 6b and the outside wall 6c.

The annular ridge 6 has a width "L2" (that is, a radial extension) of between 1.0 mm and 1.4 mm, preferably approximately 1.17 mm, measured diametrically relative to the axis "X", and a depth "H2" of between 0.25 mm and 0.70 mm, preferably approximately 0.34 mm.

In other words, the top wall 6d of the ridge 6 (together with the outside wall 6c) has a width equal to "L2".

Preferably, the rear face 3a of the annular flange 3 has, in a transversal cross section in a plane through the axis, a profile having a rectilinear transition stretch "T" joining the annular groove 4 and the annular ridge 6 to each other and directed towards the axis "X". Preferably, the rectilinear stretch "T" is parallel to the axis "X". It might, however, also be inclined relative to the axis X, for example at an angle of inclination in the interval [0; 20] sexagesimal degrees made with the direction of the axis X towards the upper edge 2b of the body 2 of the cup, that is, towards the lid 40 of the capsule).

The rectilinear stretch "T" might be substituted for a change in concavity (inflection) with a vertical tangent, that is to say, parallel to the axis "X".

Preferably, the rectilinear stretch "T" is formed by the outside wall 4d of the groove 4 and the inside wall 6b of the ridge 6, which are arranged in sequence relative to each other and aligned in parallel to the axis "X".

The groove 4 and the ridge 6 extend around the axis "X" of the cup.

Preferably, the rectilinear stretch "T" formed by the outside wall 4d of the groove 4 and the inside wall 6b of the ridge 6 has a diameter "D" of between 30.34 mm and 30.74 mm, more preferably of approximately 30.54 mm.

Preferably, the inside wall 4c and the bottom wall 4e of the groove 4 define a curved profile, and more preferably, a circular arc. Preferably, the outside wall 4d of the groove 4 is rectilinear and parallel to the axis "X".

The width "L2" of the ridge 6 is greater than the width "L1" of the groove 4. Preferably, the width "L2" of the ridge 6 is greater than the width "M" of the border 51. Preferably, the width "L2" of the ridge 6 is substantially equal to (or greater than) the sum of the width "L1" of the groove 4 and the width "M" of the border 51.

Preferably, the ratio between the width L2 and the quantity (M+L1) is in the interval [2, 3.5].

Preferably, the top wall 6d of the ridge 6 is flat or substantially flat.

Preferably, the wall 6c (the outside wall of the ridge 6) is inclined to form a bevel joining the ridge 6 to a portion of the of the rear face 3a of the flange 3 on the outer side of the ridge 6 itself.

Preferably, the wall 6c is inclined relative to the axis X at an angle of between 0 and 45 sexagesimal degrees.

As regards the shape of the rear face 3a of the flange 3, it should be noted that there are important aspects for the capsule seal.

For example, the fact that the rear face 3a of the flange 3 defines, in sequence, starting from the body 2 of the cup 1, the border 51, the groove 4 and the ridge 6 guarantees an effective seal for all the capsules and at all points of interface between the cup 1 and the pressure hood 100.

In light of this, it should be noted that the profile of the cup (at the flange 3) and/or that of the pressure hood might not be perfectly circular.

This, besides possible centring errors between the cup 1 and the pressure hood 100 in the coffee making machine, means that the pressure hood 100, depending on circumstances and the zone of the pressure hood 100 itself (within the 360 degrees of extension of the profile of the pressure hood 100) might come into contact with different zones of the rear face 3a of the flange.

Whatever the case, these zones will be between the border 51 and the ridge 6 (border 51 and ridge 6 included). This guarantees a good seal between the pressure hood 100 and the rear face 3a of the flange 3 at all times.

Preferably, the containment body 2 externally defines a step 7 at the top of it close to the upper edge 2b and/or a chamfer 8 located in the lower portion of the containment body 2.

The step 7 defines an external shoulder 7a designed to allow the cup 1 to rest on the annular flange 3 of an identical cup underneath it.

The chamfer 8, on the other hand, preferably has a rounded shape and defines a local reduction in the diameter of the containment body 2 in the direction of the bottom 2a, giving the containment body 2 an outer shape which tapers towards the bottom 2a.

The containment body 2 and the annular flange 3 are made in one piece.

The containment body 2 and the annular flange 3 have a multilayer structure comprising:

- an inner layer "S1" made of a plastic material, defining the front face 3b of the annular flange 3 and the inside surface of the containment body 2;
- an outer layer (S2) made of a soft plastic material whose hardness is preferably less than that of the inner layer "S1";
- an intermediate layer "S3" between the inner layer "S1" and the outer layer "S2" and made of a material impermeable to oxygen and aromas.

The inner layer "S1" is made of a material which can confer good rigidity on the bottom 2a of the containment body 2 when the bottom 2a itself is subjected to the cutting action of specific knives (not illustrated). This material is preferably polypropylene.

The outer layer "S2" is made of a material which is deformable enough to allow it to adhere to the corresponding upper edge 101 of the pressure hood element 100. This material preferably has a hardness which is less than that of the material the inner layer "S1" is made of. The outer layer "S2" is made preferably of PE. Alternatively, the outer layer "S2" might be made of PP or other materials.

It should be noted that the outer layer "S2" of the cup (that is, of the flange 3 of the cup) is made of a soft, deformable material. This material can undergo at least partly plastic deformation. Preferably, the material the outer layer "S2" is made of can also undergo at least partly plastic deformation. In light of this, it should be noted that the elasticity modulus of the layer S2 is preferably less than 1400 MPa. In other words, the elasticity modulus of the layer S2 is within the interval [0, 1400] MPa.

The intermediate layer is preferably made of EVOH.

The cup 1 is therefore made by a thermoforming process from a multilayer sheet "F", or piece of sheet comprising the above mentioned three layers "S1", "S2", "S3" and in turn obtained by means of an extrusion process.

This process thus allows obtaining a cup which is more rigid in the part of it directed towards the space "V", and softer on the opposite side, where the annular groove 4 and ridge 6 are formed.

Preferably, in order to increase the rigidity of the bottom 2a of the containment body 2, the latter may have stiffening ribs 9 arranged radially away from the axis "X".

One preferred embodiment of a method for making the cup 1 described above comprises a step of preparing a multilayer sheet "F", or piece of sheet (preferably extruded) with a pair of end layers "S1", "S2" made of plastic materials differing in hardness, and an intermediate layer "S3" located between the end layers "S1", "S2" and made of a material impermeable to oxygen and to aromas, and a subsequent step of subjecting the sheet "F" to a thermoforming action in order to give the sheet "F" a three-dimensional shape comprising the containment body 2.

It should be noted that there is also a step of selecting the thickness of the layers S1, S2 and S3 to strike a compromise between the requirements of the forming process and those of keeping the quality of the product contained in the capsule, for example by selecting different values for the thickness of the three layers.

Thermoforming is accomplished by means of a forming die 200 having an annular protrusion 201 which is shaped to match the groove 4 in order to impress the shape of the groove 4 on the sheet "F", and acting in conjunction with an upper punch "P" designed to press the sheet "F" against the forming die 200 below and to give the sheet "F" a three-dimensional shape defining the cup 1. The forming die 200 also has an annular recess 202 adjacent to the annular protrusion 201 and shaped to match the annular ridge 6 to impress the shape of the annular ridge 6 on the sheet "F".

During thermoforming, the forming die 200 is placed in contact with the outer layer "S2" made of less hard plastic material.

One preferred embodiment of a machine for making the cup 1 described above comprises means (not illustrated because they are of known type) for feeding a multilayer sheet "F", or piece of sheet, and a thermoforming device configured to give the sheet "F" a three-dimensional shape comprising the containment body 2, where the thermoforming device comprises a forming die 200 of the type just described.

The advantages of using the cup 1 according to the invention, as described above, are particularly evident in a process for making coffee using a capsule 50 made with the cup 1.

More specifically, according to this process, the cup 1 is inserted into a coffee machine having a hollow pressure hood element 100 adapted to receive the bottom 2a of the cup 1, and having the aforementioned end edge 101 adapted to act in conjunction with the rear face 3a of the annular flange 3.

More specifically, as illustrated in Figures 1 and 2, the end edge 101 has an annular protrusion 102 designed to be inserted into the annular groove 4 of the cup 1, and an annular recess 103 designed to receive the annular ridge 6 of the cup 1.

Thus, the annular protrusion 102 and the annular recess 103 are arranged in sequence relative to each other, with the annular recess 103 on the outer side of the annular protrusion 102.

The end edge 101 of the pressure hood element 100 is designed to be pressed against the rear face 3a of the annular flange 3 of the cup in such a way as to produce an at least partly plastic deformation of the outer layer "S2" of the cup 1, made of softer material. Preferably, this deformation is also partly elastic.

Preferably, also, the end edge 101 of the pressure hood element 100 and the part of the rear face 3a of the annular flange 3 of the cup 1 having the groove 4 and the annular ridge 6 are shaped to fit snugly together with an interference fit, that is to say, producing deformation of the outer layer "S2" at least at a side wall of the groove 4. Preferably, this deformation occurs at the rectilinear stretch "T" described above, as shown Figure 2 which shows the non-deformed profiles of the annular flange 4 and of the end edge 101 of the pressure hood element 100, as well as the deformed configuration after the two parts are pressed together. This may be achieved by undersizing the width of the annular groove 4 relative to the annular protrusion 102 and/or by oversizing the width of the annular ridge 6 relative to the annular recess 103.

It should also be noted that it is also possible (thanks to the shape and size variability of the pressure hood and cup) that the interference and consequent deformation occur at the top (flat) part of the tooth 6 or outside wall of the tooth (inclined at an angle of between 0° and 45°).

During movement of the pressure hood element 100 (prior to activating the hermetic seal) suitable knives (not illustrated in the drawings) cut the bottom 2 of the cup 1 so that the dose of coffee 30 is sprayed with water or steam at a high temperature and thus starting the coffee brewing process.

The present invention achieves the preset aims, overcoming the disadvantages of the prior art.

Indeed, the combination of the multilayer structure (and more specifically, the three-layer structure) with the geometry of the rear face of the annular flange, with annular groove and ridge, allows considerably improving the hermetic seal between the capsule and the pressure hood element during use, in particular during the compressive action applied by the pressure hood element.

The advantages in terms of seal effectiveness are offered by the greater softness of the outer layer, which is thus more easily deformed upon contact with the suitably shaped end edge of the pressure hood element.

At the same time, the greater rigidity of the inner layer allows increasing cup strength (which is further enhanced by the stiffening ribs at the bottom of the cup), allowing savings in material.

The multilayer structure is, moreover, easily deformed by means of a thermoforming process starting from a sheet of multilayer material, thus simplifying the production process of the cup.

Furthermore, the presence of the intermediate layer configured to prevent the passage of gas, in particular, oxygen and aromas, (for example, EVOH or other materials which can create a barrier to oxygen and aromas) allows the coffee aroma to be kept inside the capsule without having to further pack the capsule in any outer wrappers.

The aroma-impermeable layer is also impermeable to oxygen. The presence of oxygen inside the capsule is thus limited and oxidation of the coffee inside the capsule is limited accordingly.

The aroma-impermeable layer works both ways. Thus, it also prevents extraneous aromas from permeating into the capsule from the outside.

Further, the material of the inner layer S1 and/or the material the outer layer S2 is made of is a material impermeable to humidity (for example, PP, or alternatively, PE), with evident advantages in terms of storability, maintenance of product quality and correct powder density.

The shape of the rear face 3a of the flange allows the hermetic seal to be further improved by producing deformation of the outer layer of the rear face 3a of the flange in a zone of contact and compression between the rear face 3a of the flange itself and the pressure hood 100. More specifically, the shape of the rear face 3a of the flange guarantees an optimum seal along the entire capsule profile, even if the pressure hood 100 does not have a perfectly circular profile and/or is not perfectly centred relative to the axis of the capsule.

The presence of the step and of the chamfer also allow the usability of the capsule to be improved.

The step 7, located in the upper half of the cup 1, preferably in the proximity of the annular flange 3a, makes it easier to stack identical cups, with obvious advantages in terms of transportability and storage.

The chamfer 8, on the other hand, is located in the bottom half of the cup 1 and gives the cup a slender, tapered configuration, making it easier to extract the cup from the pressure hood element after use.

Another function of the chamfer 8 is to prevent impact between the pressure hood 100 and the bottom and/or side of the capsule 50 during movement of the pressure hood. This advantageously avoids the risk of the capsule being deformed before the capsule is perforated and the seal is created between the pressure hood and the capsule.

In another embodiment, this description provides a cup 1 for a capsule 50 (for coffee or other infusion), comprising a containment body 2 which extends between a bottom 2a and an upper edge 2b and comprises, at the upper edge 2b, an annular flange 3 extending around the axis X.

The annular flange 3 has a rear face 3a directed towards the containment body 2 and a front face 3b adapted to receive a lid 40 for closing the cup to form the capsule.

The containment body 2 and the annular flange 3 may be made of any material. For example, they may be made of aluminium, or they may be defined by a multilayer structure as described above.

It should also be noted that the cup 1 might be used to make capsules filled with products other than coffee, to make hot or cold beverages or infusions of other kinds (for example, using tea powders, barley or other infusion products) but always creating a fluid-tight seal between a pressure hood element 100 and a flange 3 of the cup 1.

Whatever the case, the annular flange 3 has a soft, deformable portion on its rear face 3a. This portion is made of a material which is deformable at least partly plastically. Preferably, the material is deformable also at least partly elastically, with an elasticity modulus preferably less than 1400 MPa.

In this embodiment, the annular flange 3 has, on its rear face 3a, an annular groove 4 which extends around the axis X. The groove 4 is configured to act in conjunction with an end edge 101 of a pressure hood element 100 of a coffee machine.

The annular flange 3 has on its rear face 3a an annular ridge 6. The ridge 6 is preferably adjacent to the groove 4. The ridge 6 is on the outer side of the selfsame groove 4. The ridge 6 extends away from the rear face 3a of the annular flange 3.

Preferably, the rear face 3a of the annular flange 3 has, in a transversal cross section in a plane through the axis, a profile having a rectilinear transition stretch "T" (substantially parallel to the axis X), defined by corresponding walls of the annular groove 4 and annular ridge 6 and directed towards the axis X.

According to the invention, the annular ridge 6 has a radial extension which is greater than the radial extension of the groove 4.

Preferably, the rear face 3a of the annular flange 3 has an annular zone 51 extending radially and interposed between the upper edge 2b of the containment body 2 and the groove 4.

Preferably, a radial extension M of the annular zone 51, a radial extension L1 of the groove 4 and a radial extension L2 of the annular ridge 6 satisfy the following relation:

$$L2 = k\,(M+L1)$$

where k is a number in the interval [2; 3.5].

Preferably, the annular ridge 6 has an outside wall 6c which is distal from the body 2 of the cup 1 and which is inclined to form a bevel joining the ridge 6 to a portion of the of the rear face 3a of the flange 3 on the outer side of the ridge 6 itself. Preferably, the inclination of the outside wall 6c relative to the axis X makes an angle of between 0 and 45 sexagesimal degrees.

It should be noted that the annular zone 51, the groove 4 and the annular ridge 6 are made of the aforementioned soft, deformable material. In other words, they form on the rear face 3a of the annular flange 3 a zone which is made of the aforementioned soft, deformable material.

Thus, when the coffee is brewed in the coffee machine, the movement of the pressure hood element 100 against the rear face 3a of the annular flange 3 causes deformation of the outer layer S2 of the annular flange 3 at one or more of the following portions of the annular flange 3 (or at least part of them): the annular groove 4; the annular ridge 6; a rectilinear stretch T of transition between the groove 4 and the annular ridge 6; an annular zone 51 extending radially and interposed between the upper edge 2b of the containment body 2 and the groove 4. In all these cases (that is, for all the zones of the annular flange 3 just mentioned), the seal between the flange 3 and the pressure hood 100 is effective because it involves at least partly plastic deformation of the deformable material (of the outer layer S2) of the annular flange 3 against the pressure hood 100.

Indeed, in use, the end of the pressure hood 100 comes into contact with the rear face 3a of the annular flange 3 in one of the following ways, alternatively:

i) the end of the pressure hood 100 interacts with one of the aforementioned portions of the annular flange 3 (border 51, groove 4 or ridge 6), causing deformation of at least that portion;
i) the end of the pressure hood 100 interacts with two adjacent portions of the aforementioned portions of the annular flange 3 (border 51, groove 4 or ridge 6), causing deformation (at least partial) of both of the portions.

Whatever the case, thanks to the shape of the face 3a of the flange 3 according to this description, the seal is guaranteed.

This has the advantage of guaranteeing an effective seal even if the profile of the pressure hood 100 or of the flange 3 is not regular or perfectly circular (where such irregularity might, for example, be due to wear of the pressure hood) or if the pressure hood and the capsule are not well centred and allow interaction between the pressure hood 100 and the flange 3 to occur simultaneously in different zones of the annular flange 3 (that is, zones of the annular flange 3 at different radial distances from the axis X of the capsule).

## Claims

1. A cup (1) for a coffee capsule (50), comprising a containment body (2) extending between a bottom (2a) and an upper edge (2b) and further comprising, at the upper edge (2b), an annular flange (3) which extends around an axis (X) and which has a rear face (3a) directed towards the containment body (2) and a front face (3b) adapted to receive a cup sealing lid (40) to form the capsule,

wherein the annular flange (3) has, on its rear face (3a), an annular ridge (6) and an annular groove (4) which extend around the axis (X) and which are configured to be able to act in conjunction with an end edge (101) of a pressure hood element (100) of a coffee machine, **characterized in that** the containment body (2) and the annular flange (3) are defined by a multilayer structure having an inner layer (S1) made of a plastic material, defining the front face (3b) of the annular flange (3) and the inside surface of the containment body (2), an outer layer (S2) made of a soft, deformable plastic material, and an intermediate layer (S3) between the inner layer (S1) and the outer layer (S2), made of a material impermeable to oxygen and aromas, wherein the inner layer (S2) is made of a more rigid material than the outer layer (S2), wherein the annular ridge (6) has a radial extension which is greater than the radial extension of the groove (4).

2. The cup according to either of the preceding claims, wherein the annular ridge (6) is adjacent to the groove (4) on the outer side of the groove itself and extends away from the rear face (3a) of the annular flange (3).

3. The cup according to any one of the preceding claims, wherein the rear face (3a) of the annular flange (3) has, in a transversal cross section in a plane through the axis (X), a profile having a rectilinear stretch (T) substantially parallel to the axis (X), defined by corresponding walls of the annular groove (4) and annular ridge (6) and directed towards the axis (X).

4. The cup according to any one of the preceding claims, wherein the rear face (3a) of the annular flange (3) has an annular zone (51) extending radially and interposed between the upper edge (2b) of the containment body (2) and the groove (4), wherein a radial extension (M) of the annular zone (51), a radial extension (L1) of the groove (4) and a radial extension (L2) of the annular ridge (6) satisfy the following equation:

$$L2 = k\,(M{+}L1)$$

wherein k is a number in the interval [2; 3.5].

5. The cup according to any one of the preceding claims, wherein the annular ridge (6) has an outside wall (6c) which is distal from the body (2) of the cup (1) and which is inclined to form a bevel joining the ridge (6) to a portion of the of the rear face (3a) of the flange (3) on the outer side of the ridge (6) itself, wherein the wall (6c) is inclined relative to the axis (X) at an angle of between 0° and 45° sexagesimal degrees.

6. The cup according to any one of the preceding claims, wherein the upper edge (2b) of the containment body (2) and the annular flange (3) defines an annular joining zone (5), and wherein the groove (4) is located at a position spaced from the annular joining zone (5).

7. The cup according to any one of the preceding claims, wherein the containment body (2) has, in bottom portion of it, a chamfer (8) preferably rounded in shape, defining a local reduction in the diameter of the containment body (2) in the direction of the bottom (2a).

8. A coffee capsule (50) comprising a cup (1) according to any one of the preceding claims, a dose (30) of coffee powder placed in the containment body (2) and a lid (40) placed on the annular flange (3) of the cup (1) to seal the containment body (2) hermetically.

9. A method for making a cup (1) according to any one of claims 1 to 7, comprising the following steps:

- preparing an extruded, multilayer sheet (F) having an inner layer (S1) and an outer layer (S2) made of plastic materials, wherein the outer layer (S2) is soft and deformable, and an intermediate layer (S3) located between the inner and outer layers (S1, S2) and made of a material which is impermeable to oxygen and/or to aromas;
- thermoforming the multilayer sheet (F) to give it a three-dimensional shape defining the containment body (2);

wherein the thermoforming step is performed by a forming die (200) placed in contact with the outer layer (S2) of plastic material, the forming die (200) having an annular protrusion (201) shaped to match the groove (4) to impress the shape of the groove (4) on the sheet (F), wherein the inner layer (S1) is harder than the outer layer (S2).

10. The method according to claim 9, wherein the forming die (200) has an annular recess (202) alongside the annular protrusion (201) to impress the shape of an annular ridge (6) on the sheet (F).

**11.** A machine for making a cup according to any one of claims 1 to 7, comprising:

- means for feeding a multilayer sheet (F);
- a thermoforming device (200, P) configured to give the sheet (F) a three-dimensional shape comprising the containment body (2);

wherein the thermoforming device (200, P) comprises a forming die (200) having an annular protrusion (201) shaped to match the groove (4) to impress on the sheet (F) the shape of an annular groove (4) on a rear face (3a) of an annular flange (3) of the cup, wherein the annular ridge (6) has a radial extension which is greater than the radial extension of the groove (4), wherein the multilayer sheet (F) includes an inner layer (S1), made of plastic material and defining the front face of the annular flange and the inner surface of the container body, and an outer layer (S2), made of soft plastic material and defining the rear face of the annular flange and the outer surface of the containment body, and an intermediate layer (S3) between the inner layer (S1) and the outer layer (S2), made of a material impermeable to oxygen and aromas, and wherein the inner layer (S1) is harder than the outer layer (S2).

**12.** The machine according to claim 11, wherein the forming die (200) has an annular recess (202) shaped to match the annular ridge (6) to impress on the sheet (F) the shape of an annular ridge (6) on the rear face (3a) of the annular flange (3) of the cup, where the annular recess (202) is adjacent to, and on the outer side of, the annular protrusion (201).

**13.** A method for making coffee, comprising the following steps:

- preparing a capsule (50) according to claim 8;
- inserting the capsule (50) into a housing of a coffee machine equipped with a pressure hood element (100) having an end edge (101) of annular shape and provided with an annular protrusion (102);
- moving the pressure hood element (100) against the rear face (3a) of the annular flange (3) of the cup (1) of the capsule (50) in such a way that the annular protrusion (102) of the pressure hood element (100) engages by interference the annular groove (4) of the cup (1) causing the outer layer (S2) to be deformed at the annular groove (4);
- perforating the containment body (2) at the bottom (2a);

- delivering hot steam or hot water through the capsule (50) to make coffee,

wherein the step of perforating includes perforating a multilayer sheet (F), which includes an inner layer (S1), made of plastic material and defining the front face of the annular flange and the inner surface of the container body, and an outer layer (S2), made of soft plastic material and defining the rear face of the annular flange and the outer surface of the containment body, and an intermediate layer (S3) between the inner layer (S1) and the outer layer (S2), made of a material impermeable to oxygen and aromas, and wherein the inner layer (S1) is harder than the outer layer (S2) and wherein the annular ridge (6) has a radial extension which is greater than the radial extension of the groove (4).

**14.** The method according to claim 13, wherein the step of moving the pressure hood element (100) against the rear face (3a) of the annular flange (3) causes deformation of the outer layer (S2) at one or more of the following portions of the annular flange (3a): the annular groove (4); the annular ridge (6); a rectilinear stretch (T) of transition between the groove (4) and the annular ridge (6); an annular zone (51) extending radially and interposed between the upper edge (2b) of the containment body (2) and the groove (4).

**Patentansprüche**

**1.** Kapselhalter (1) für eine Kaffeekapsel (50), umfassend einen Behälterkörper (2), sich erstreckend zwischen einem Boden (2a) und einer oberen Kante (2b), und zudem umfassend an der oberen Kante (2b) einen ringförmigen Flansch (3),

der sich rund um eine Achse (X) erstreckt und der eine hintere Seitenfläche (3a) aufweist, die zum Behälterkörper (2) zeigt, und eine vordere Seitenfläche (3b), die ausgelegt ist, um einen Kapselhaltersiegeldeckel (40) aufzunehmen, um die Kapsel zu bilden, wobei der ringförmige Flansch (3) an seiner hinteren Seitenfläche (3a) eine ringförmige Erhöhung (6) und eine ringförmige Vertiefung (4) aufweist, die sich rund um die Achse (X) erstreckt, die ausgelegt sind, um in der Lage zu sein, in Verbindung mit einer Endkante (101) eines Druckhaubenelements (100) einer Kaffeemaschine zu wirken, **dadurch gekennzeichnet, dass** der Behälterkörper (2) und der ringförmige Flansch (3) durch eine mehrschichtige Struktur definiert sind, aufweisend eine Innenschicht (S1), bestehend aus einem Kunststoffmaterial, definierend die vordere Seitenfläche (3b) des ringförmigen Flanschs (3) und die innere Oberfläche des Behälterkörpers (2), eine Außenschicht (S2), bestehend aus einem weichen, verformbaren Kunststoffmaterial, und eine Zwischenschicht (S3) zwischen der Innenschicht (S1) und der Außenschicht (S2), bestehend aus einem Material, das für Sauerstoff und Aromen undurchlässig ist, wobei die Innenschicht (S2) aus einem steiferen Material als die Außenschicht (S2) besteht, wobei die ringförmige Erhöhung (6) eine radiale Ausdehnung aufweist, die größer ist als die radiale Ausdehnung der Vertiefung (4).

2. Kapselhalter nach einem der vorhergehenden Ansprüche, wobei die ringförmige Erhöhung (6) angrenzend an die Vertiefung (4) an der Außenseite der Vertiefung angeordnet ist und sich wegführend von der hinteren Seitenfläche (3a) des ringförmigen Flanschs (3) erstreckt.

3. Kapselhalter nach einem der vorhergehenden Ansprüche, wobei die hintere Seitenfläche (3a) des ringförmigen Flanschs (3) in einem quer verlaufenden Querschnitt in einer Ebene durch die Achse (X) ein Profil besitzt, aufweisend ein geradliniges Teilstück (T), im Wesentlichen parallel zur Achse (X), definiert durch entsprechende Wände der ringförmigen Vertiefung (4) und der ringförmigen Erhöhung (6) und zeigend zur Achse (X).

4. Kapselhalter nach einem der vorhergehenden Ansprüche, wobei die hintere Seitenfläche (3a) des ringförmigen Flanschs (3) eine ringförmige Zone (51) aufweist, sich erstreckend radial und eingesetzt zwischen der oberen Kante (2b) des Behälterkörpers (2) und der Vertiefung (4), wobei eine radiale Ausdehnung (M) der ringförmigen Zone (51), eine radiale Ausdehnung (L1) der Vertiefung (4) und eine radiale Ausdehnung (L2) der ringförmigen Erhöhung (6) folgende Gleichung erfüllen:

$$L2 = k \ (M+L1),$$

wobei k eine Zahl im Intervall [2; 3,5] ist.

5. Kapselhalter nach einem der vorhergehenden Ansprüche, wobei die ringförmige Erhöhung (6) eine außenseitige Wand (6c) aufweist, die vom Körper (2) des Kapselhalters (1) distal und geneigt ist, um eine abgeschrägte Kante zu formen, die die Erhöhung (6) mit einem Abschnitt der hinteren Seitenfläche (3a) des Flanschs (3) an der Außenseite der Erhöhung (6) verbindet, wobei die Wand (6c) relativ zur Achse (X) in einem Winkel von 0° bis 45° Sexagesimalgrad geneigt ist.

6. Kapselhalter nach einem der vorhergehenden Ansprüche, wobei die obere Kante (2b) des Behälterkörpers (2) und der ringförmige Flansch (3) eine ringförmige Verbindungszone (5) definieren, und wobei die Vertiefung (4) an einer Position angeordnet ist, die von der ringförmigen Verbindungszone (5) beabstandet ist.

7. Kapselhalter nach einem der vorhergehenden Ansprüche, wobei der Behälterkörper (2) in seinem Bodenabschnitt eine Schrägkante (8) aufweist, die vorzugsweise eine runde Form besitzt, definierend eine lokale Reduzierung des Durchmessers des Behälterkörpers (2) in der Richtung des Bodens (2a).

8. Kaffeekapsel (50), umfassend einen Kapselhalter (1) nach einem der vorhergehenden Ansprüche, eine Dosis (30) Kaffeepulver, die im Behälterkörper (2) platziert ist, und einen Deckel (40), der auf dem ringförmigen Flansch (3) des Kapselhalters (1) platziert ist, um den Behälterkörper (2) hermetisch zu versiegeln.

9. Verfahren zur Herstellung eines Kapselhalters (1) nach einem der Ansprüche 1 bis 7, umfassend die folgenden Schritte:

- Vorbereiten einer extrudierten mehrschichtigen Folie (F), aufweisend eine Innenschicht (S1) und eine Außenschicht (S2) bestehend aus Kunststoffmaterialien, wobei die Außenschicht (S2) weich und verformbar ist, und eine Zwischenschicht (S3), die zwischen der Innen- und der Außenschicht (S1, S2) angeordnet ist und aus einem Material besteht, das für Sauerstoff und/oder Aromen undurchlässig ist;
- Thermoformen der mehrschichtigen Folie (F), um dieser eine dreidimensionale Form zu verleihen, definierend den Behälterkörper (2),

wobei der Schritt zum Thermoformen von einem Umformwerkzeug (200) durchgeführt wird, angeordnet in Kontakt mit der Außenschicht (S2) aus Kunststoffmaterial, wobei das Umformwerkzeug (200) einen ringförmigen Vorsprung (201) aufweist, ausgebildet passend zur Vertiefung (4), um die Form der Vertiefung (4) auf die Folie (F) aufzuprägen, wobei die Innenschicht (S1) härter ist als die Außenschicht (S2).

10. Verfahren nach Anspruch 9, wobei das Umformwerkzeug (200) einen ringförmigen Einschnitt (202) entlang des ringförmigen Vorsprungs (201) aufweist, um die Form einer ringförmigen Erhöhung (6) auf die Folie (F) aufzuprägen.

11. Maschine zur Herstellung eines Kapselhalters nach einem der Ansprüche 1 bis 7, umfassend:

- eine mehrschichtige Folie (F);

- Mittel zum Zuführen einer mehrschichtigen Folie (F);

- eine Thermoformungsvorrichtung (200, P), ausgelegt, um der Folie (F) eine dreidimensionale Form, umfassend den Behälterkörper (2), zu verleihen,

wobei die Thermoformungsvorrichtung (200, P) ein Umformwerkzeug (200) umfasst, aufweisend einen ringförmigen Vorsprung (201), ausgebildet passend zur Vertiefung (4), um die Form einer ringförmigen Vertiefung (4) an einer hinteren Seitenfläche (3a) eines ringförmigen Flanschs (3) des Kapselhalters auf die Folie (F) aufzuprägen, wobei die ringförmige Erhöhung (6) eine radiale Ausdehnung aufweist, die größer ist als die radiale Ausdehnung der Vertiefung (4),

wobei die mehrschichtige Folie (F) eine Innenschicht (S1) umfasst, bestehend aus Kunststoffmaterial und definierend die vordere Seitenfläche des ringförmigen Flanschs und die innere Oberfläche des Behälterkörpers, und eine Außenschicht (S2), bestehend aus weichem Kunststoffmaterial und definierend die hintere Seitenfläche des ringförmigen Flanschs und die äußere Oberfläche des Behälterkörpers, und eine Zwischenschicht (S3) zwischen der Innenschicht (S1) und der Außenschicht (S2), bestehend aus einem Material, das für Sauerstoff und Aromen undurchlässig ist, und wobei die Innenschicht (S1) härter ist als die Außenschicht (S2).

**12.** Maschine nach Anspruch 11, wobei das Umformwerkzeug (200) einen ringförmigen Einschnitt (202) aufweist, der passend zur ringförmigen Erhöhung (6) ausgebildet ist, um auf der Folie (F) die Form einer ringförmigen Erhöhung (6) an der hinteren Seitenfläche (3a) des ringförmigen Flanschs (3) des Kapselhalters an der Stelle, an die der ringförmige Einschnitt (202) angrenzt, und an der Außenseite des ringförmigen Vorsprungs (201) aufzuprägen.

**13.** Verfahren zur Zubereitung von Kaffee, umfassend die folgenden Schritte:

- Vorbereiten einer Kapsel (50) nach Anspruch 8;

- Einfügen der Kapsel (50) in eine Aufnahme einer Kaffeemaschine, die mit einem Druckhaubenelement (100) ausgestattet ist, aufweisend eine Endkante (101) einer Ringform und versehen mit einem ringförmigen Vorsprung (102);

- Bewegen des Druckhaubenelements (100) gegen die hintere Seitenfläche (3a) des ringförmigen Flanschs (3) des Kapselhalters (1) der Kapsel (50), sodass der ringförmige Vorsprung (102) des Druckhaubenelements (100) durch Interferenz mit der ringförmigen Vertiefung (4) des Kapselhalters (1) in Eingriff gelangt, wodurch die Außenschicht (S2) an der ringförmigen Vertiefung (4) verformt wird;

- Perforieren des Behälterkörpers (2) am Boden (2a);

- Zuführen von heißem Dampf oder heißem Wasser durch die Kapsel (50), um Kaffee zuzubereiten,

wobei der Schritt zum Perforieren das Perforieren einer mehrschichtigen Folie (F) umfasst, die eine Innenschicht (S1) umfasst, bestehend aus Kunststoffmaterial und definierend die vordere Seitenfläche des ringförmigen Flanschs und die innere Oberfläche des Behälterkörpers, und eine Außenschicht (S2), bestehend aus weichem Kunststoffmaterial und definierend die hintere Seitenfläche des ringförmigen Flanschs und die äußere Oberfläche des Behälterkörpers, und eine Zwischenschicht (S3) zwischen der Innenschicht (S1) und der Außenschicht (S2), bestehend aus einem Material, das für Sauerstoff und Aromen undurchlässig ist, und wobei die Innenschicht (S1) härter ist als die Außenschicht (S2) und wobei die ringförmige Erhöhung (6) eine radiale Ausdehnung aufweist, die größer ist als die radiale Ausdehnung der Vertiefung (4).

**14.** Verfahren nach Anspruch 13, wobei der Schritt zum Bewegen des Druckhaubenelements (100) gegen die hintere Seitenfläche (3a) des ringförmigen Flanschs (3) die Verformung der Außenschicht (S2) an einem oder mehreren der folgenden Abschnitte des ringförmigen Flanschs (3a) bewirkt: der ringförmigen Vertiefung (4), der ringförmigen Erhöhung (6), einem geradlinigen Teilstück (T) des Übergangs zwischen der Vertiefung (4) und der ringförmigen Erhöhung (6), einer ringförmigen Zone (51), sich erstreckend radial und eingesetzt zwischen der oberen Kante (2b) des Behälterkörpers (2) und der Vertiefung (4).

## Revendications

**1.** Coupelle (1) pour une capsule à café (50), comprenant un corps de contenance (2) se prolongeant entre un fond (2a) et un bord supérieur (2b) et comprenant de plus, en correspondance du bord supérieur (2b), une bride annulaire (3) qui se prolonge autour d'un axe (X) et comportant un côté postérieur (3a) orienté vers le corps de contenance (2) et un côté antérieur (3b) adapté pour recevoir un opercule de fermeture de coupelle (40) pour former la capsule,

dans lequel la bride annulaire (3) comporte, sur son côté postérieur (3a), une strie annulaire (6) et une rainure annulaire (4) qui se prolongent autour de l'axe (X) et qui sont configurées pour pouvoir agir conjointement avec un bord d'extrémité (101) d'un élément presseur (100) à cloche d'une machine à café, **caractérisée en ce que** le corps de contenance (2) et la bride annulaire (3) sont définies par une structure multicouche comportant une couche interne (S1), constituée d'un matériau en plastique, définissant le côté antérieur (3b) de la bride annulaire (3) et de la surface intérieure du corps de contenance (2), une couche externe (S2), constituée d'un matériau en plastique souple et déformable, et une couche intermédiaire (S3), entre la couche interne (S1) et la couche externe (S2), constituée d'un matériau imperméable à l'oxygène et aux arômes, dans laquelle la couche interne (S2) est constituée d'un matériau plus rigide que la couche externe (S2), dans laquelle la strie annulaire (6) comporte une extension radiale étant supérieure à l'extension radiale de la rainure (4).

2. Coupelle selon l'une quelconque des revendications précédentes, dans laquelle la strie annulaire (6) est adjacente à la rainure (4) sur le côté extérieur de la rainure elle-même et se prolonge en s'éloignant du côté postérieur (3a) de la bride annulaire (3).

3. Coupelle selon l'une quelconque des revendications précédentes, dans laquelle le côté postérieur (3a) de la bride annulaire (3) comporte, dans une section transversale dans un plan à travers l'axe (X), un profil comportant une portion rectiligne (T), substantiellement parallèle à l'axe (X), défini par des cloisons correspondantes de la rainure annulaire (4) et de la strie annulaire (6) et orienté vers l'axe (X).

4. Coupelle selon l'une quelconque des revendications précédentes, dans laquelle le côté postérieur (3a) de la bride annulaire (3) comporte une zone annulaire (51) se prolongeant radialement et interposée entre le bord supérieur (2b) du corps de contenance (2) et la rainure (4), dans laquelle une extension radiale (M) de la zone annulaire (51), une extension radiale (L1) de la rainure (4) et une extension radiale (L2) de la strie annulaire (6) satisfont l'équation suivante :

$$L2 = k \ (M+L1)$$

où k est un nombre compris dans l'intervalle [2 ; 3.5].

5. Coupelle selon l'une quelconque des revendications précédentes, dans laquelle la strie annulaire (6) comporte une cloison extérieure (6c) étant distale du corps (2) de la coupelle (1) et étant inclinée pour former un biseau assemblant la strie (6) à une partie du côté postérieur (3a) de la bride (3) sur le côté extérieur de la strie (6) elle-même, dans laquelle la cloison (6c) est inclinée par rapport à l'axe (X) selon un angle compris entre 0 et 45° degrés sexagésimaux.

6. Coupelle selon l'une quelconque des revendications précédentes, dans laquelle le bord supérieur (2b) du bord de contenance (2) et de la bride annulaire (3) définit une zone d'assemblage annulaire (5), et dans laquelle la rainure (4) est située en correspondance d'une position espacée de la zone d'assemblage annulaire (5).

7. Coupelle selon l'une quelconque des revendications précédentes, dans laquelle le corps de contenance (2) comporte, dans une partie de fond de celui-ci, un chanfrein (8) de préférence de forme arrondie, définissant une réduction locale du diamètre du corps de contenance (2) dans la direction du fond (2a).

8. Capsule à café (50) comprenant une coupelle (1) selon l'une quelconque des revendications précédentes, une dose (30) de poudre de café placée dans le corps de contenance (2) et un opercule (40) placé sur la bride annulaire (3) de la coupelle (1) pour sceller le corps de contenance (2) de façon hermétique.

9. Procédé de fabrication d'une coupelle (1) selon l'une quelconque des revendications de 1 à 7, comprenant les étapes suivantes :

- préparer une feuille multicouche extrudée (F) comportant une couche interne (S1) et une couche externe (S2) composées de matériaux en plastique, dans lequel la couche externe (S2) est souple et déformable, et une couche intermédiaire (S3) située entre les couches interne et externe (S1, S2) et constituée d'un matériau qui est imperméable à l'oxygène et/ou aux arômes ;
- thermoformer la feuille multicouche (F) pour lui donner une forme tridimensionnelle définissant le corps de contenance (2) ;

dans lequel l'étape de thermoformation est réalisée par un moule de formage (200) placé en contact avec la couche externe (S2) en matériau plastique, le moule de formage (200) comportant une saillie annulaire (201) formée pour correspondre à la rainure (4) pour imprimer la forme de la rainure (4) sur la feuille (F), dans lequel la couche interne (S1) est plus dure que la couche externe (S2).

**10.** Procédé selon la revendication 9, dans lequel le moule de formage (200) comporte un renfoncement annulaire (202) le long de la saillie annulaire (201) pour imprimer la forme d'une strie annulaire (6) sur la feuille (F).

**11.** Machine de fabrication d'une coupelle selon l'une quelconque des revendications de 1 à 7, comprenant :

- une feuille multicouche (F) ;
- des moyens pour alimenter une feuille multicouche (F) ;
- un dispositif de thermoformage (200, P) configuré pour donner à la feuille (F) une forme tridimensionnelle comprenant le corps de contenance (2) ;

dans laquelle le dispositif de thermoformage (200, P) comprend un moule de formage (200) comportant une saillie annulaire (201) formée pour correspondre à la rainure (4) pour imprimer sur la feuille (F) la forme d'une rainure annulaire (4) sur un côté postérieur (3a) d'une bride annulaire (3) de la coupelle, dans laquelle la strie annulaire (6) comporte une extension radiale étant supérieure à l'extension radiale de la rainure (4),

dans laquelle la feuille multicouche (F) inclut une couche interne (S1), constituée d'un matériau en plastique et définissant le côté antérieur de la bride annulaire et de la surface intérieure du corps de contenance, et une couche externe (S2), constituée d'un matériau en plastique souple et définissant le côté postérieur de la bride annulaire et de la surface extérieure du corps de contenance, et une couche intermédiaire (S3), entre la couche interne (S1) et la couche externe (S2), constituée d'un matériau imperméable à l'oxygène et aux arômes, et dans laquelle la couche interne (S1) est plus dure que la couche externe (S2).

**12.** Machine selon la revendication 11, dans laquelle le moule de formage (200) comporte un renfoncement annulaire (202) formé pour correspondre à la strie annulaire (6) pour imprimer sur la feuille (F) la forme d'une strie annulaire (6) sur le côté postérieur (3a) de la bride annulaire (3) de la coupelle, où le renfoncement annulaire (202) est adjacent à, et situé sur le côté extérieur de la saillie annulaire (201).

**13.** Procédé de fabrication d'un café, comprenant les étapes suivantes :

- préparer une capsule (50) selon la revendication 8 ;
- introduire la capsule (50) dans un logement d'une machine à café équipée d'un élément presseur (100) à cloche comportant un bord d'extrémité (101) de forme annulaire et pourvu d'une saillie annulaire (102) ;
- déplacer l'élément presseur (100) à cloche contre le côté postérieur (3a) de la bride annulaire (3) de la coupelle (1) de la capsule (50) de sorte que la saillie annulaire (102) de l'élément presseur (100) à cloche se mette en prise par interférence avec la rainure annulaire (4) de la coupelle (1) pour provoquer la déformation de la couche externe (S2) en correspondance de la rainure annulaire (4) ;
- perforer le corps de contenance (2) en correspondance du fond (2a) ;
- alimenter de la vapeur chaude ou de l'eau chaude à travers la capsule (50) pour faire du café,

dans lequel l'étape de perforation inclut la perforation d'une feuille multicouche (F) incluant une couche interne (S1), constituée d'un matériau en plastique et définissant le côté antérieur de la bride annulaire et de la surface intérieure du corps de contenance, et une couche externe (S2), constituée d'un matériau en plastique souple et définissant le côté postérieur de la bride annulaire et de la surface extérieure du corps de contenance, et une couche intermédiaire (S3), entre la couche interne (S1) et la couche externe (S2), constituée d'un matériau imperméable à l'oxygène et aux arômes, et dans lequel la couche interne (S1) est plus dure que la couche externe (S2) et dans laquelle la strie annulaire (6) comporte une extension radiale étant supérieure à l'extension radiale de la rainure (4).

**14.** Procédé selon la revendication 13, dans lequel l'étape consistant à déplacer l'élément presseur (100) à cloche contre le côté postérieur (3a) de la bride annulaire (3) provoque la déformation de la couche externe (S2) en correspondance d'une ou plusieurs parties de la bride annulaire (3a) : la rainure annulaire (4) ; la strie annulaire (6) ; une portion rectiligne (T) de transition entre la rainure (4) et la strie annulaire (6) ; une zone annulaire (51) se prolongeant radialement et interposée entre le bord supérieur (2b) du corps de contenance (2) et la rainure (4).

FIG.1

FIG.1A

FIG.2

FIG.3

# FIG.4

# FIG.5

FIG.6

FIG.7

FIG.8

X

1

1

7

8

FIG.9

7

7a

1

8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012080501 A
- EP 2489609 A
- WO 2013076519 A
- WO 2013136209 A
- US 2010288131 A
- WO 2013157924 A